# FASCICULE DE BREVET EUROPEEN

(11) **EP 4 134 562 B1**
(45) Date de publication et mention de la délivrance du brevet: **21.08.2024**
(21) Numéro de dépôt: 22186961.3
(22) Date de dépôt: 26.07.2022
(51) Int. Cl.: F16D 1/10, F16H 1/28, F02C 3/10

(54) **ARBRE CANNELÉ**
GERIFFELTE WELLE
SPLINED SHAFT

(30) Priorité: 10.08.2021 FR 2108617
(43) Date de publication de la demande: 15.02.2023
(73) Titulaire: Safran Transmission Systems, 92700 Colombes (FR)
(72) Inventeur: MARCOS IZQUIERDO, Juan-Luis, 77550 Moissy-Cramayel (FR); PIGOTT, Quentin, Pierre, Henri, 77550 Moissy-Cramayel (FR)
(74) Mandataire: Ernest Gutmann - Yves Plasseraud S.A.S.

(56) Documents cités:
- DE-U1- 202013 004 236
- JP-A- 2014 077 474
- US-A- 5 098 358

## Description

### Domaine technique de l'invention

L'invention concerne un arbre cannelé et un porte-satellites pour un train planétaire, comportant au moins un axe de support destiné au montage d'un satellite et au moins un arbre cannelé. Un tel train planétaire est notamment destiné à former un réducteur de vitesse, notamment pour une turbomachine.

### Etat de la technique antérieure

Le rôle d'un réducteur de vitesse est de modifier le rapport de vitesse et le couple entre un arbre d'entrée et un arbre de sortie du réducteur.

Les nouvelles générations de turbomachines à double flux, notamment celles ayant un haut taux de dilution, comportent un réducteur de vitesse permettant d'entraîner l'arbre d'une soufflante. De manière usuelle, le réducteur de vitesse a pour but de transformer la vitesse de rotation dite rapide d'un arbre d'une turbine de puissance de la turbomachine en une vitesse de rotation plus lente permettant d'entraîner l'arbre de la soufflante.

Un tel réducteur de vitesse comprend un pignon central, appelé solaire, une couronne et des pignons appelés satellites, qui sont en prise entre le solaire et la couronne. Les satellites sont maintenus par un organe appelé porte-satellites. Le solaire, la couronne et le porte-satellites sont des éléments dits planétaires, leurs axes de révolution coïncidant avec l'axe longitudinal X de la turbomachine. Les satellites ont des axes de révolution distincts, régulièrement répartis sur un même diamètre autour de l'axe des planétaires. Les axes des satellites sont parallèles à l'axe longitudinal X.

Il existe plusieurs architectures de réducteurs de vitesse. Dans l'état de l'art des turbomachines à double flux, les réducteurs sont de type planétaire ou épicycloïdal. Il existe dans d'autres applications similaires, des réducteurs dits différentiels. Dans le cas d'un réducteur planétaire, le porte-satellites est fixe, le solaire est relié à l'arbre d'entrée et la couronne est reliée à l'arbre de sortie, l'arbre de sortie tournant dans le sens inverse de l'arbre d'entrée. Dans le cas d'un réducteur épicycloïdal, la couronne est fixe, le solaire est relié à l'arbre d'entrée et le porte-satellites est relié à l'arbre de sortie, l'arbre de sortie tournant dans le même sens que l'arbre d'entrée. Enfin, dans le cas d'un réducteur différentiel, aucun élément n'est fixé en rotation et la couronne tourne dans le sens contraire du solaire et du porte-satellites.

Les réducteurs peuvent être composés d'un ou de plusieurs étages d'engrènement. Cet engrènement peut être assuré de différentes façons, par exemple par contact, par friction ou encore par champ magnétique. Il existe par ailleurs plusieurs types d'engrènement par contact, tels que l'utilisation de dentures droites ou en chevron.

Dans le cas d'une architecture de type épicycloïdale par exemple, le porte-satellites est par exemple relié à l'arbre de sortie par l'intermédiaire d'un arbre cannelé. En d'autre termes, le porte-satellites comporte un arbre comportant des cannelures dites males à sa périphérie, coopérant avec des cannelures complémentaires dites femelles, d'un arbre entraîné, ou inversement. Le document JP20140774474A décrit une liaison par cannelures dont le pas n'est pas constant sur la circonférence de l'arbre. Le document US5098358A montre un réducteur de type planétaire comportant des liaisons par cannelures.

En fonctionnement, le couple transite radialement le long de directions ou de lignes reliant chacune l'un des axes supports de satellites et l'axe du porte-satellites.

Il a été constaté que l'absence de répartition homogène des efforts sur la circonférence du porte-satellites génère une légère déformation de l'arbre cannelé, de sorte que certaines cannelures, dites actives, viennent au contact des cannelures complémentaires correspondantes alors que d'autres cannelures, dites passives, présentent des contacts moins prononcés voire une absence de contact avec les cannelures complémentaires. En pratique, les cannelures actives sont situées sur et à proximité de chacune des lignes précitées, les cannelures passives étant écartées desdites lignes.

Dans un tel cas, les efforts transitent par les cannelures qui sont actives, au détriment des cannelures passives, de sorte que la répartition des efforts n'est pas homogène sur toute la circonférence.

### Présentation de l'invention

L'invention vise à remédier à cet inconvénient, de façon simple, fiable et peu onéreuse.

A cet effet, l'invention concerne un arbre cannelé présentant une périphérie et comportant des cannelures régulièrement réparties sur la périphérie, les cannelures étant espacées les unes des autres, au moins une partie des cannelures étant espacées d'un pas modifié p par rapport au pas nominal pn des cannelures, le rapport de la valeur absolue de la différence entre le pas modifié et le pas nominal, sur le pas nominal, c'est-à-dire |pn - p| / pn, étant non nul, de préférence compris entre 0,5 et 5 %.

Le pas p, s'exprimant par exemple en mm, est défini comme le module pour la cannelure concernée, à savoir comme la valeur du périmètre du secteur entre deux points homologues de deux cannelures consécutives divisé par pi (π).

Le pas nominal peut être défini comme le pas moyen de l'ensemble des cannelures de l'arbre.

L'arbre peut être un arbre creux. Les déformations précitées apparaissent plus marquées sur un arbre creux, par rapport à un arbre plein.

Le fait de modifier le pas d'au moins certaines cannelures permet de pouvoir rendre moins actives certaines cannelures et de rendre plus actives d'autres cannelures, de façon à mieux répartir les efforts sur l'ensemble des cannelures réparties sur la circonférence ou la périphérie de l'arbre cannelé.

Pour au moins une partie des cannelures, la différence entre le pas modifié et le pas nominal peut être positive, lesdites cannelures étant dites en avance, et pour au moins une autre partie des cannelures, la différence entre le pas modifié et le pas nominal peut être négative, lesdites cannelures étant dites en retard.

Les cannelures en avance peuvent alors être disposées au niveau des zones comportant des cannelures qui sont passives dans le cas de l'art antérieur, et les cannelures en retard peuvent être disposées au niveau des zones comportant des cannelures qui sont actives dans le cas de l'art antérieur. De cette manière, il est possible de rendre active l'ensemble des cannelures, c'est-à-dire d'obtenir une bonne répartition des contraintes mécaniques sur l'ensemble des cannelures de l'arbre.

L'arbre cannelé peut comporter le long de la périphérie, au moins une alternance de cannelures en avance et de cannelures en retard.

En d'autres termes, l'arbre cannelé peut comporter au moins une zone comportant plusieurs cannelures en avance, suivi d'une zone comportant plusieurs cannelures en retard. Bien entendu, rien n'empêche que certaines cannelures puissent être ni en avance, ni en retard, mais présenter un pas correspondant au pas nominal.

L'arbre cannelé peut comporter le long de la périphérie, plusieurs alternances successives de cannelures en avance et de cannelures en retard.

Selon l'invention, la différence entre le pas nominal pn entre les cannelures par rapport au pas modifié p, le long de la périphérie, augmente ou diminue progressivement d'une cannelure à l'autre, au fur et à mesure que l'on parcourt la périphérie de l'arbre cannelé, ladite différence augmentant jusqu'à un maximum avant de diminuer jusqu'à un minimum.

En d'autres termes, la différence pn-p évolue par rapport à la circonférence suivant une fonction alternativement croissante et décroissante.

L'évolution de la différence du pas entre les cannelures par rapport au pas nominal, le long de la périphérie, peut suivre une loi globalement sinusoïdale.

Il s'avère qu'il est possible de réaliser aisément une telle évolution sinusoïdale de la différence de pas lors de la fabrication de l'arbre cannelé, à l'aide des procédés actuels.

L'évolution de la différence du pas entre les cannelures par rapport au pas nominal, le long de la périphérie, peut être une évolution par paliers.

En d'autres termes, plusieurs cannelures successives peuvent présenter le même pas. Une telle évolution peut être obtenue aisément par usinage d'au moins un flanc de chaque cannelure par exemple, lors de la fabrication des cannelures. Plusieurs paliers distincts peuvent exister, par exemple un palier minimum, un palier maximum et optionnellement au moins un palier intermédiaire.

L'invention comporte également un porte-satellites pour un train planétaire, comportant au moins un axe de support destiné au montage d'un satellite et au moins un arbre cannelé selon l'une des revendications précédentes.

Bien entendu, l'invention est également applicable à toute pièce structurelle comportant un arbre cannelé, en particulier un arbre cannelé creux.

Au moins une cannelure en retard peut être située sur ou à proximité de la ligne reliant l'arbre cannelé ou l'axe du porte-satellites, d'une part, et l'axe de support du satellite, d'autre part, et/ou au moins une cannelure en avance peut être éloignée de ladite ligne.

Une telle structure permet de disposer les cannelures en avance au niveau des zones comportant des cannelures qui sont passives dans le cas de l'art antérieur, et les cannelures en retard au niveau des zones comportant des cannelures qui sont actives dans le cas de l'art antérieur. De cette manière, il est possible de rendre active l'ensemble des cannelures, c'est-à-dire d'obtenir une bonne répartition des contraintes mécaniques sur l'ensemble des cannelures de l'arbre.

L'invention concerne également un train planétaire pour une turbomachine, comportant au moins un porte-satellites du type précité.

L'invention concerne également une turbomachine compotant un train planétaire du type précité. La turbomachine peut être un turboréacteur ou un turbopropulseur. La turbomachine peut être un turboréacteur à double flux. Le train planétaire est apte à former un réducteur de vitesse entre un arbre de turbine, par exemple un arbre de turbine basse pression, et un arbre destiné à entraîner une soufflante.

### Brève description des figures

[Fig. 1] est une demi-vue en coupe axiale d'une turbomachine de l'art antérieur,
[Fig. 2] est une demi-vue en coupe axiale d'une partie d'un réducteur de vitesse de l'art antérieur,
[Fig. 3] est une vue en perspective d'un porte-satellites d'un train épicycloïdal,
[Fig. 4] est une vue en coupe d'un accouplement entre l'arbre cannelé du porte-satellites et un arbre de sortie, relié à la soufflante,
[Fig. 5] est une vue de détail de la figure 4
[Fig. 6] est une vue schématique illustrant l'avance d'une cannelure
[Fig. 7] est une vue schématique illustrant le retard d'une cannelure,
[Fig. 8] est une vue schématique illustrant la variation de la différence entre le pas nominal et le pas modifié des cannelures, le long de la circonférence, ou la périphérie, dans le cas d'une variation de type sinusoïdale,
[Fig. 9] est une vue schématique illustrant la variation de la différence entre le pas des cannelures et le pas nominal, le long de la circonférence, ou la périphérie, dans le cas d'une variation par palier,
[Fig. 10] est une vue correspondant à la figure 8, illustrant une variation par paliers de la différence entre le pas modifié et le pas nominal des cannelures,
[Fig. 11] est une vue correspondant à la figure 9, illustrant ladite variation par palier de la différence entre le pas modifié et le pas nominal des cannelures.

### Description détaillée de l'invention

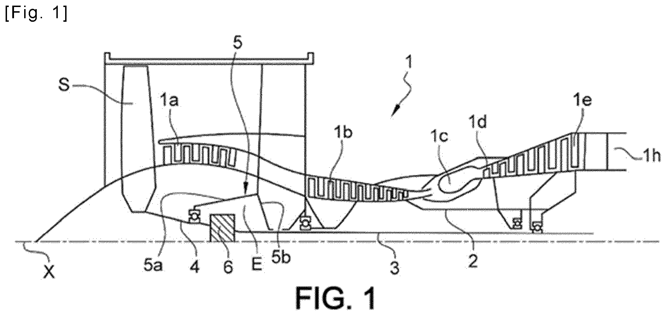

La figure 1 illustre une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites 10, la couronne 9 et le solaire 7, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

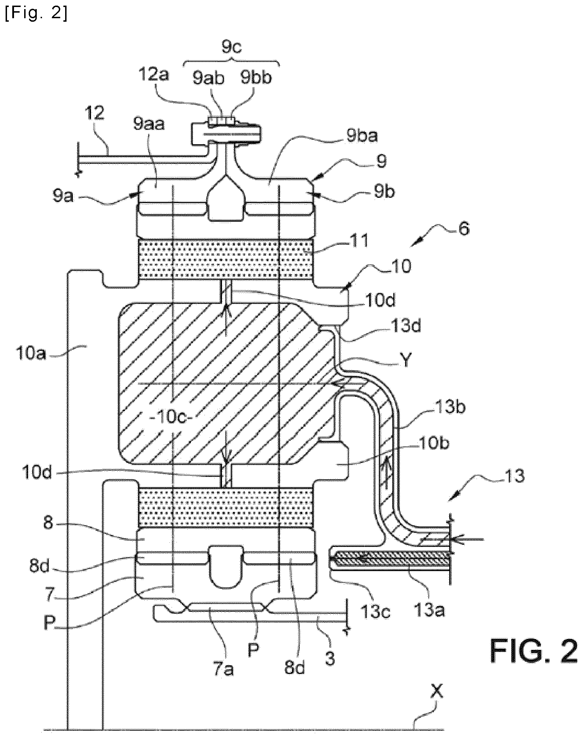

La figure 2 illustre un réducteur 6 qui peut prendre la forme de différentes architectures selon si certaines pièces sont fixées ou en rotation. En entrée, le réducteur 6 est relié à l'arbre BP 3, par exemple par l'intermédiaire de cannelures 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont régulièrement répartis sur le même diamètre autour de l'axe de rotation X. Le nombre de satellites 8 est généralement compris entre trois et sept pour ce type d'application.

L'ensemble des satellites 8 est maintenu par un porte-satellites 10. Chaque satellite 8 tourne autour de son propre axe Y, et engrène avec la couronne 9.

Dans une configuration épicycloïdale, l'ensemble des satellites 8 entraine en rotation le porte-satellites 10 autour de l'axe X de la turbomachine. La couronne est fixée au carter moteur ou stator 5 via un porte-couronne 12 et le porte-satellites 10 est fixé à l'arbre de soufflante 4. Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes et de paliers égal au nombre de satellites. Pour des raisons de fonctionnement, de montage, de fabrication, de contrôle, de réparation ou de rechange les axes et le châssis peuvent être séparés en plusieurs pièces.

Pour les mêmes raisons citées précédemment, la denture d'un réducteur peut être séparée en plusieurs hélices. Dans notre exemple, nous détaillons le fonctionnement d'un réducteur à plusieurs hélices avec une couronne séparée en 2 demi-couronnes:
- une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
- une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général, chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

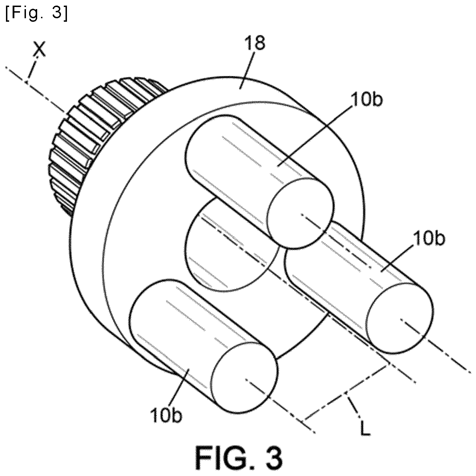

La figure 3 illustre un porte-satellites 10 dépourvu de tels moyens de lubrification ou pour lequel lesdits moyens de lubrification ne sont pas représentés.

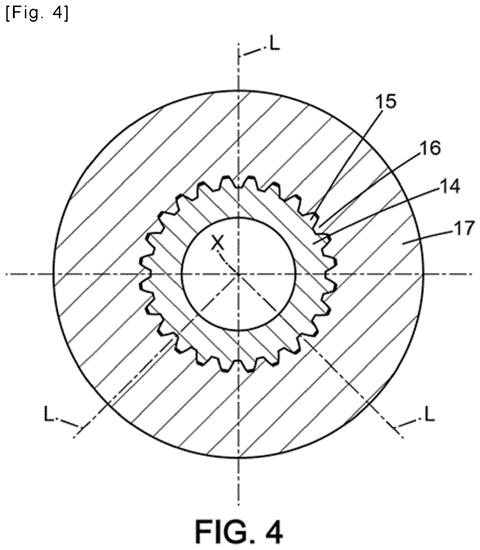

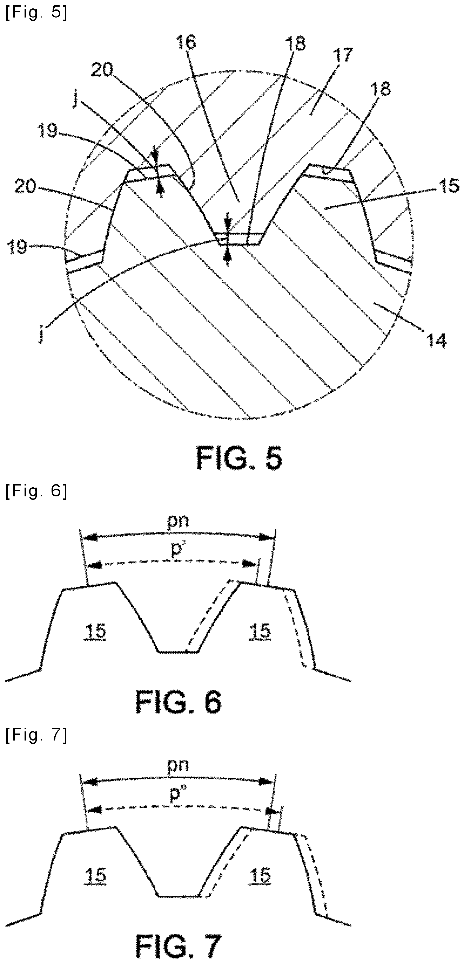

Le porte-satellites 10 est ici destiné à former une sortie (configuration épicycloïdale) et comporte un arbre mâle cannelé 14, c'est-à-dire pour lequel les cannelures 15 sont externes. Ledit arbre 14 est ici un arbre creux. Bien entendu, l'invention s'applique également au cas d'un arbre femelle, où les cannelures sont internes. Les cannelures 15 de l'arbre 14 du porte-satellites 10 sont destinées à coopérer avec des cannelures complémentaires 16 d'un arbre de sortie 17 relié à la soufflante S de la turbomachine 1, comme illustré aux figures 4 et 5. Chaque cannelure 15, 16 comporte un fond 18, un sommet 19 et deux flancs 20. Les flancs 20 peuvent être en développante de cercle, comme illustré aux figures 4 à 7, ou droits. Un jeu j est formé entre les fonds 18 et les sommets 19 des cannelures 15, 16.

Comme indiqué précédemment, lors du fonctionnement de la turbomachine 1, du couple transite dans le porte-satellites 10 radialement le long de directions ou de lignes L reliant chacune l'un des axes 10b supports de satellites 8 et l'axe X du porte-satellites 10.

Il a été constaté que l'absence de répartition homogène des efforts sur la circonférence, ou la périphérie, du porte-satellites 10 génère une légère déformation de l'arbre cannelé 14, de sorte que certaines cannelures 15, dites actives, viennent au contact des cannelures complémentaires 16 correspondantes alors que d'autres cannelures 15, dites passives, présentent des contacts moins prononcés voire une absence de contact avec les cannelures complémentaires 16. En pratique, les cannelures 15 actives sont situées sur et à proximité de chacune des lignes L précitées, les cannelures 15 passives étant écartées desdites lignes L. Dans un tel cas, les efforts transitent par les cannelures 15 qui sont actives, au détriment des cannelures 15 passives, de sorte que la répartition des efforts n'est pas homogène sur toute la circonférence.

Afin de remédier à cet inconvénient et obtenir une répartition plus homogène des contraintes mécaniques dans l'arbre cannelé 14, l'invention propose de modifier le pas d'au moins certaines des cannelures 15 de l'arbre 14.

La figure 6 illustre le cas où le pas p est réduit par rapport au pas nominal pn. Dans un tel cas, la cannelure 15 dont le pas est modifié est dite en avance. On définit la différence Δp par Δp = pn - p. Dans un tel cas, Δp est positif.

La figure 7 illustre le cas où le pas p est augmenté par rapport au pas nominal pn. Dans un tel cas, la cannelure 15 dont le pas est modifié est dite en retard. Dans un tel cas, Δp est négatif.

On définit par R le rapport de la valeur absolue de Δp sur le pas nominal pn, soit R = |Δp| / pn. Ce rapport R peut varier progressivement d'une cannelure 15 à une autre, au moins certaines des cannelures 15 présentant un rapport R non nul, par exemple compris entre 0,5 et 5 %.

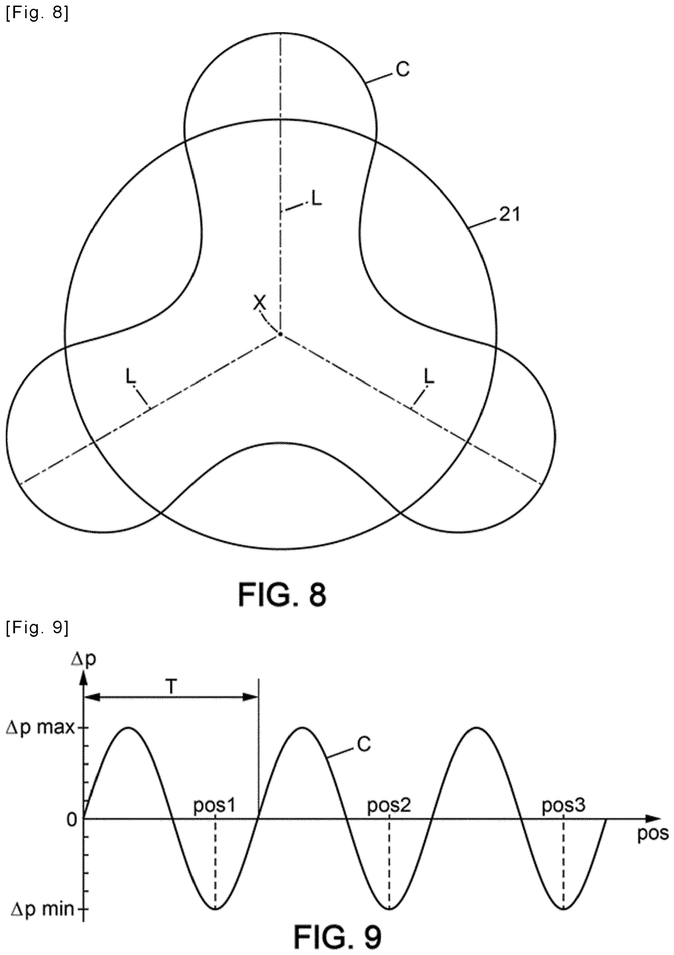

Les figures 8 et 9 illustrent la variation de Δp en fonction de la position de la cannelure 15. En particulier, à la figure 8, le cercle 21 représente le diamètre d'implantation des cannelures 15 et la courbe C illustre l'évolution de Δp en fonction de la position de la cannelure 15 correspondante sur la circonférence. La figure 9 est un autre type de représentation illustrant en deux dimension la variation de Δp (en ordonnée) par rapport à la position de la cannelure 15 (en abscisse).

Les pas p des cannelures 15 sont en particulier modifiés de façon à ce que la variation de Δp en fonction de la position de la cannelure 15 correspondante sur la circonférence suit globalement une loi sinusoïdale oscillant entre une valeur maximale Δpmax et une valeur minimale Δpmin et comportant trois périodes T sur la circonférence. Les cannelures 15 dont les pas ont une valeur de Δp égale ou proche de Δpmin, sont situés au niveau des lignes L précitées. A l'inverse, les cannelures 15 dont les pas ont une valeur de Δp égale ou proche de Δpmax, sont situés éloignées circonférentiellement des lignes L précitées.

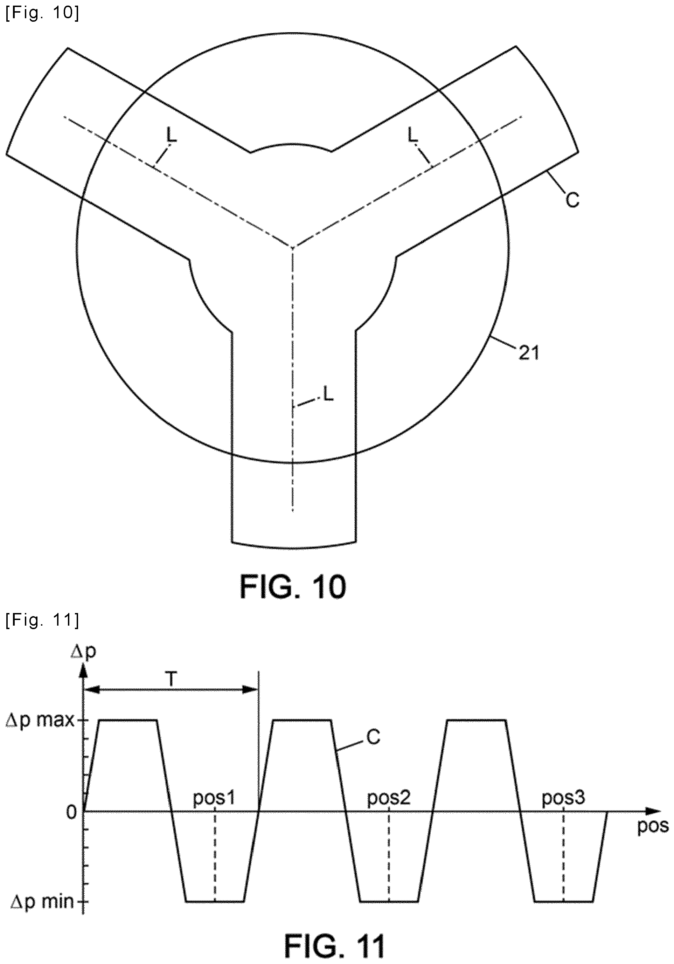

Les figures 10 et 11 correspondent respectivement aux figures 8 et 9 et illustrent un autre type de variation de la différence Δp, à savoir une variation en paliers, ici deux paliers : un palier minimum Δpmin et un palier maximum Δpmax. Plusieurs cannelures 15 peuvent ainsi présenter la même valeur Δpmin, au voisinage des lignes L précitées, et plusieurs cannelures 15 peuvent présenter la même valeur Δpmax, à distance desdites lignes L. La variation entre les deux paliers peut suivre une loi progressive continue, par exemple linéaire. Bien entendu, ladite variation par palier peut présenter plus de deux paliers, par exemple quatre paliers, à savoir un palier de valeur Δpmax, un palier de valeur Δpmin, un palier intermédiaire négative, de valeur supérieure à Δpmin et un palier intermédiaire positif, de valeur inférieure à Δpmax. Quelle que soit la loi utilisée pour la variation de Δp, le fait de modifier le pas p d'au moins certaines cannelures 15 permet de pouvoir rendre moins actives certaines cannelures 15 et de rendre plus actives d'autres cannelures 15, de façon à mieux répartir les efforts sur l'ensemble des cannelures 15 réparties sur la circonférence de l'arbre creux cannelé 14.

La modification du pas doit être, pour certaines cannelures 15 au moins, présenter un rapport maximal R = |Δp|/pn non nul, par exemple compris entre 0,5 et 5 %.

En particulier la valeur maximale de ce rapport R est obtenue pour Δpmax et pour Δpmin. Δpmax peut être égale à -Δpmin. Δpmax peut être compris entre -100 microns et +100 microns, par exemple, pour un pas nominal de 7,98 mm , par exemple. Par exemple, Δpmax peut être compris entre -500 microns et +500 microns, en particulier entre -200 microns et +200.

La modification du pas des cannelures 15 peut être obtenue directement au moment de la réalisation des cannelures 15 ou obtenue après usinage d'au moins une partie des cannelures 15, par exemple par rectification.

Dans le cadre de la description qui précède, ce sont les cannelures 15 de l'arbre 14 du porte-satellites 10 qui sont modifiées. Bien entendu, il est également possible de modifier les cannelures complémentaires 16 de l'arbre de sortie 17, sans sortir du cadre de l'invention. De façon générale, on notera qui est plus aisé d'usiner des cannelures mâles 15.

## Revendications

1. Arbre (14) cannelé de turbomachine présentant une périphérie et comprenant des cannelures (15) régulièrement réparties sur la périphérie, les cannelures (15) étant espacées les unes des autres, au moins une partie des cannelures (15) étant espacées d'un pas modifié p par rapport au pas nominal pn des cannelures (15), le rapport de la valeur absolue de la différence entre le pas modifié et le pas nominal, sur le pas nominal, c'est-à-dire |pn - p| / pn étant non nul, de préférence compris entre 0,5 et 5 %,
**caractérisé en ce que** la différence (Δp) entre le pas nominal pn entre les cannelures (15) par rapport au pas modifié p, le long de la périphérie, augmente ou diminue progressivement d'une cannelure (15) à l'autre, au fur et à mesure que l'on parcourt la périphérie de l'arbre (14) cannelé, ladite différence augmentant jusqu'à un maximum (Δpmax) avant de diminuer jusqu'à un minimum (Δpmin).

2. Arbre (14) cannelé selon la revendication précédente, dans lequel, pour au moins une partie des cannelures (15), la différence (Δp) entre le pas modifié et le pas nominal est positive, lesdites cannelures (15) étant dites en avance, et pour au moins une autre partie des cannelures (15), la différence (Δp) entre le pas modifié et le pas nominal est négative, lesdites cannelures (15) étant dites en retard.

3. Arbre (14) cannelé selon l'une des revendications précédentes, dans lequel il comporte, le long de la périphérie, au moins une alternance de cannelures (15) en avance et de cannelures (15) en retard.

4. Arbre (14) cannelé selon la revendication précédente, dans lequel il comporte, le long de la périphérie, plusieurs alternances successives de cannelures (15) en avance et de cannelures (15) en retard.

5. Arbre (14) cannelé selon l'une des revendications précédentes, dans lequel l'évolution de la différence du pas entre les cannelures (15) par rapport au pas nominal, le long de la périphérie, suit une loi globalement sinusoïdale.

6. Arbre (14) cannelé selon l'une des revendications 1 à 4, **caractérisé en ce que** l'évolution de la différence du pas entre les cannelures (15) par rapport au pas nominal, le long de la périphérie, est une évolution par paliers.

7. Porte-satellites (10) pour un train planétaire, comportant au moins un axe de support (10b) destiné au montage d'un satellite (8) et au moins un arbre (14) cannelé selon l'une des revendications précédentes.

8. Porte-satellites selon la revendication 7, dans lequel au moins une cannelure (15) en retard est située sur ou à proximité de la ligne (L) reliant l'arbre (14) cannelé ou l'axe (X) du porte-satellites (10), d'une part, et l'axe de support (10b) du satellite (8), d'autre part, et/ou au moins une cannelure (15) en avance est éloignée de ladite ligne (L).

9. Train planétaire pour une turbomachine (1), comportant au moins un porte-satellites (10) selon l'une des revendications 7 ou 8.

## Patentansprüche

1. Keilwelle (14) für Turbomaschinen bzw. Turbotriebwerke, die einen Umfang aufweist und Keilnuten (15) umfasst, die gleichmäßig über den Umfang verteilt sind, wobei die Keilnuten (15) voneinander beabstandet sind, zumindest ein Teil der Keilnuten (15) um eine modifizierte Teilung p in Bezug auf die nominale Teilung pn der Keilnuten (15) beabstandet ist, wobei das Verhältnis des Betrags der Differenz zwischen der modifizierten Teilung und der nominalen Teilung zur nominalen Teilung, d.h. |pn - p| / pn, ungleich Null ist, vorzugsweise zwischen 0,5 und 5 % liegt,
**dadurch gekennzeichnet, dass** über den Umfang der Keilwelle (14) gesehen die Differenz (Δp) zwischen der nominalen Teilung pn zwischen den Keilnuten (15) und der modifizierten Teilung p entlang des Umfangs von einer Keilnut (15) zur anderen allmählich zunimmt oder abnimmt, wobei die Differenz bis zu einem Maximum (Δpmax) zunimmt, bevor sie bis zu einem Minimum (Δpmin) abnimmt.

2. Keilwelle (14) nach dem vorhergehenden Anspruch,
wobei für zumindest einen Teil der Keilnuten (15) die Differenz (Δp) zwischen der modifizierten Teilung und der nominalen Teilung positiv ist, wobei die Keilnuten (15) als voreilend bezeichnet werden, und für zumindest einen anderen Teil der Keilnuten (15) die Differenz (Δp) zwischen der modifizierten Teilung und der nominalen Teilung negativ ist, wobei die Keilnuten (15) als nacheilend bezeichnet werden.

3. Keilwelle (14) nach einem der vorhergehenden Ansprüche,
wobei sie entlang des Umfangs zumindest eine Wechselfolge von voreilenden und nacheilenden Keilnuten (15) aufweist.

4. Keilwelle (14) nach dem vorhergehenden Anspruch,
wobei sie entlang des Umfangs mehrere aufeinanderfolgende Wechselfolgen von voreilenden und nacheilenden Keilnuten (15) aufweist.

5. Keilwelle (14) nach einem der vorhergehenden Ansprüche,
wobei die Differenz der Teilung zwischen den Keilnuten (15) zur nominalen Teilung entlang des Umfangs einen insgesamt sinusförmigen Verlauf zeigt.

6. Keilwelle (14) nach einem der Ansprüche 1 bis 4,
**dadurch gekennzeichnet, dass** die Differenz der Teilung zwischen den Keilnuten (15) zur nominalen Teilung entlang des Umfangs einen stufenweisen Verlauf zeigt.

7. Planetenradträger (10) für Planetengetriebe, mit zumindest einer Lagerachse (10b) zur Lagerung eines Planetenrads (8) und zumindest einer Keilwelle (14) nach einem der vorhergehenden Ansprüche.

8. Planetenradträger nach Anspruch 7,
wobei zumindest eine nacheilende Keilnut (15) auf oder in der Nähe der Linie (L) liegt, die die Keilwelle (14) bzw. die Achse (X) des Planetenradträgers (10) einerseits und die Lagerachse (10b) des Planetenrads (8) andererseits verbindet, und/oder zumindest eine nacheilende Keilnut (15) von der Linie (L) entfernt liegt.

9. Planetengetriebe für Turbomaschinen bzw. Turbotriebwerke (1), mit zumindest einem Planetenradträger (10) nach einem der Ansprüche 7 oder 8.

## Claims

1. Splined shaft (14) for a turbine engine having a periphery and comprising splines (15) evenly distributed over the periphery, the splines (15) being spaced apart from each other, at least one portion of the splines (15) being spaced apart by a modified pitch p with respect to the nominal pitch pn of the splines (15), the ratio of the absolute value of the difference between the modified pitch and the nominal pitch, to the nominal pitch, i.e. |pn - p| / pn being different from zero, preferably comprised between 0.5 and 5%, **characterised in that** the difference (Δp) between the nominal pitch pn between the splines (15) with respect to the modified pitch p, along the periphery, progressively increases or decreases from one spline (15) to another, as the periphery of the splined shaft (14) is covered, said difference increasing up to a maximum (Δpmax) before decreasing down to a minimum (Δpmin).

2. Splined shaft (14) according to the preceding claim, wherein, for at least one portion of the splines (15), the difference (Δp) between the modified pitch and the nominal pitch is positive, said splines (15) being so-called in advance, and for at least one other portion of the splines (15), the difference (Δp) between the modified pitch and the nominal pitch is negative, said splines (15) being so-called delayed.

3. Splined shaft (14) according to any one of the preceding claims, wherein it includes, along the periphery, at least one alternation of splines (15) in advance and of delayed splines (15).

4. Splined shaft (14) according to the preceding claim, wherein it includes, along the periphery, several successive alternations of splines (15) in advance and of delayed splines (15).

5. Splined shaft (14) according to any one of the preceding claims, wherein the evolution of the pitch difference between the splines (15) with respect to the nominal pitch, along the periphery, follows a generally sinusoidal law.

6. Splined shaft (14) according to any one of claims 1 to 4, **characterised in that** the evolution of the difference of the pitch between the splines (15) with respect to the nominal pitch, along the periphery, is a stepped evolution.

7. Planet carrier (10) for a planetary gear train, including at least one support axis (10b) intended for mounting a planet gear (8) and at least one splined shaft (14) according to any one of the preceding claims.

8. Planet carrier according to claim 7, wherein at least one delayed spline (15) is located on or proximate to the line (L) connecting the splined shaft (14) or the axis (X) of the planet carrier (10), on the one hand, and the support axis (10b) of the planet (8), on the other hand, and/or at least one advanced spline (15) is away from said line (L).

9. Planetary gear train for a turbine engine (1), including at least one planet carrier (10) according to any one of claims 7 or 8.
